Europäisches Patentamt

European Patent Office

Office européen des brevets

(11) Numéro de publication: **0 316 228**
**A1**

(12) **DEMANDE DE BREVET EUROPEEN**

(21) Numéro de dépôt: **88402795.4**

(22) Date de dépôt: **07.11.88**

(51) Int. Cl.⁴: **H 04 L 7/00**
**H 04 J 3/06**

(30) Priorité: **09.11.87 FR 8715511**

(43) Date de publication de la demande:
**17.05.89 Bulletin 89/20**

(84) Etats contractants désignés: **BE DE ES GB IT**

(71) Demandeur: **JS TELECOMMUNICATIONS**
**31, 32, quai de Dion Bouton**
**F-92811 Puteaux Cédex (FR)**

(72) Inventeur: **Picandet, Jean**
**12, rue du Docteur Paquelin**
**F-75020 Paris (FR)**

**Garnier, Jean-François**
**7, allée de la Cascade**
**F-92500 Rueil-Malmaison (FR)**

(74) Mandataire: **Levesque, Denys et al**
**Cabinet Beau de Loménie 55, rue d'Amsterdam**
**F-75008 Paris (FR)**

(54) **Circuit de base de temps.**

㉗ L'invention est relative à un circuit de base de temps relié à un réseau public de téléphonie par au moins une liaison et fonctionnant quel que soit l'état de la (ou des) liaison(s).
Selon l'invention il comprend au moins un module (1) connecté à trois bus (3, 4, 5), comprenant:
- des moyens (110) pour extraire, du signal transmis par ladite liaison lorsqu'elle est activée, un premier signal de synchronisation,
- des moyens (15) délivrant un second signal de synchronisation,
- des moyens (14) émettant un signal proportionnel à la différence de phase entre lesdits premier et second signaux de synchronisation,
- des moyens (19) pour émettre un signal de référence,
- des moyens (13) pilotés par ledit signal proportionnel et dont le signal de sortie pilote lesdits moyens (19) pour émettre un signal de référence, et lesdits moyens (15) délivrant un second signal de synchronisation,
- des moyens (12) pour transmettre au premier bus (5) le premier signal de synchronisation lorsqu'une liaison est activée ou le second signal de synchronisation lorsqu'aucune liaison n'est activée,
- des moyens (18) délivrant un signal significatif du bon ou mauvais fonctionnement du module,
- des moyens (16, 17, 11) pour n'autoriser la transmimssion du signal de référence au deuxième bus (3) et du second signal de synchronisation au troisième bus (4) que lorsque ledit module n'est pas défaillant,
les moyens (110, 12, 13, 15, 18, 19) étant tous reliés à un bus local (10).
De façon préférée, le circuit de base de temps comprend au moins deux modules identiques (1, 2) connectés à trois bus communs (3, 4, 5), un module étant choisi comme pilote, les moyens (18) permettant en outre de rendre pilote un autre module lorsque le module pilote est défaillant.
Application à la téléphonie.

EP 0 316 228 A1

**Description**

La présente invention concerne la téléphonie et est relative à un circuit de base de temps, notamment utilisable dans une régie.

Une régie est une interface entre le réseau public de téléphonie, par exemple du type RNIS (réseau numérique à intégration de services) et les services de l'utilisateur (ordinateurs, postes téléphoniques .). La régie est connectée au réseau public par un nombre variable de liaisons.

En fonctionnement normal, au moins une liaison est activée. Le circuit de base de temps de la régie est conçu pour se synchroniser sur le réseau public grâce à un signal d'horloge extrait du signal transmis par une liaison activée.

Lorsqu'aucune liaison issue du réseau public n'est activée, le circuit de base de temps de la régie n'est plus synchronisé par le réseau public. Le circuit doit donc comprendre un système délivrant un signal d'horloge interne pour assurer le fonctionnement en local de la régie.

Par ailleurs, le circuit de base de temps doit comprendre un système lui permettant de se resynchroniser sur le réseau public lorsqu'il passe de l'état où aucune liaison issue du réseau public n'est activée à celui où au moins une liaison est activée. Ce système doit de plus assurer une resynchronisation qui ne perturbe pas le fonctionnement en local de la régie.

Les circuits de base de temps connus assurent la synchronisation en fonctionnement normal. Ils ne sont pas conçus pour réaliser une resynchronisation ne perturbant pas le fonctionnement de la régie lors du passage de l'état où aucune liaison n'est activée à celui où au moins une liaison est activée.

L'invention a pour but de proposer un circuit de base de temps relié à un réseau par au moins une liaison et fonctionnant quel que soit l'état de la (ou des) liaison(s).

Il est de plus conçu de telle façon que la survenance d'un défaut ne puisse bloquer le fonctionnement de la régie.

Selon l'invention, le circuit comprend un module connecté à trois bus et comprenant :
- des moyens pour extraire, du signal transmis par ladite liaison lorsqu'elle est activée, un premier signal de synchronisation, reliés à un bus local,
- des moyens délivrant un second signal de synchronisation, reliés au bus local,
- des moyens émettant un signal proportionnel à la différence de phase entre lesdits premier et second signaux de synchronisation,
- des moyens pour émettre un signal de référence, reliés au bus local,
- des moyens pilotés par ce signal proportionnel et dont le signal de sortie pilote les moyens pour émettre un signal de référence et les moyens délivrant un second signal de synchronisation reliés au bus local,
- des moyens pour transmettre au premier bus le premier signal de synchronisation lorsqu'une liaison est activée ou le second signal de synchronisation lorsqu'aucune liaison n'est activée, reliés au bus local,
- des moyens délivrant un signal significatif du bon ou mauvais fonctionnement du module, reliés au bus local,
- des moyens pour n'autoriser la transmission du signal de référence au deuxième bus et du second signal de synchronisation au troisième bus que lorsque le module n'est pas défaillant.

De préférence, le circuit de base de temps est constitué d'au moins deux modules identiques connectés en parallèle aux trois bus communs, un module étant choisi comme pilote et les moyens délivrant un signal significatif du fonctionnement du module permettant de rendre pilote un autre module lorsque le module pilote est défaillant.

Cette architecture permet, comme nous le verrons plus précisément ci après, d'éviter l'arrêt du fonctionnement du circuit de base de temps et de la régie en cas de panne sur un module.

L'invention sera mieux comprise et d'autres buts, avantages et caractéristiques apparaîtront plus clairement à la lecture de la description suivante faite en référence à la Figure unique qui représente un exemple non limitatif de réalisation de l'invention.

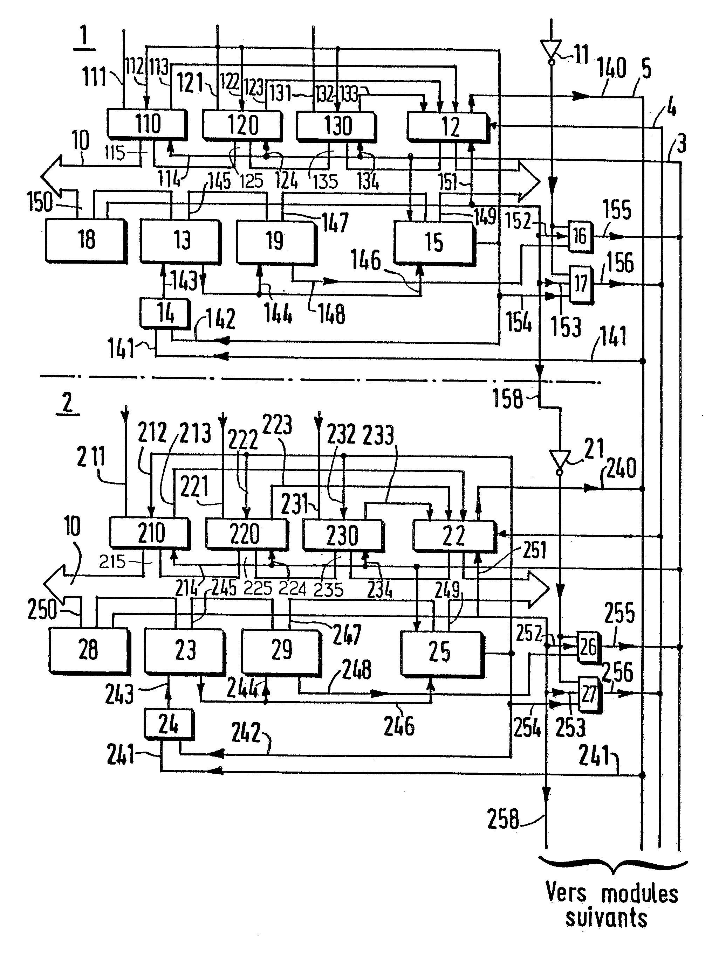

Sur la Figure 1 sont représentés deux modules référencés 1 et 2. Chaque module est connecté au réseau public par un nombre déterminé de liaisons. La description sera faite relativement au module 1. Pour chaque module, les mêmes éléments sont désignés par les mêmes références. Pour les références supérieures à 10, seul le premier chiffre, représentatif du module, change.

Ce module comprend autant de circuits dits du type ISAC que l'on décrira en détails ultérieurement, qu'il existe de liaisons connectant le module au réseau public.

Sur la Figure 1 sont représentés trois circuits du type ISAC désignés par les références 110, 120 et 130. Le fonctionnement et la structure de ces circuits seront sommairement décrits en référence au circuit 110. Ces circuits ISAC peuvent notamment être constitués par des circuits intégrés portant la référence PEB 2085 de marque SIEMENS.

Les éléments désignés par les références 110 à 115 correspondent à ceux désignés par les références 120 à 125, respectivement 130 à 135. Le circuit 110 est relié au bus local 10 par une liaison 115 et par une liaison 111 au réseau public.

Le circuit 110 comprend essentiellement trois parties. La première partie du circuit reçoit le signal éventuellement transmis par le réseau public via la liaison 111. Si cette liaison est activée, il délivre un signal récurrent appelé signal CP, à 512 kbit/s, qui est en phase avec la base de temps de réseau public et qui est transmis à un circuit multiplexeur 12 via une liaison 113. Cette première partie est synchronisée sur le réseau public quand la liaison 111 est activée.

Une deuxième partie du circuit reçoit, via la liaison 112, le signal dit DCL issu de l'horloge locale 15, dont le fonctionnement sera décrit ultérieurement.

Enfin, une troisième partie permet de compenser des différences de phases pouvant exister entre le signal CP et le signal DLC jusqu'à 18 µs. Des échanges de données ont lieu entre les première et deuxième parties du circuit 110.

La référence 12 désigne un circuit multiplexeur de n entrées vers une sortie. La sortie du circuit 12 est reliée par une liaison 140 à un premier bus 5 commun à tous les modules. Le circuit 12 comprend une entrée reliée au circuit de contrôle 18 comme nous le verrons ultérieurement et, de plus, autant d'entrées que de circuits du type ISAC inclus dans le module.

Dans notre exemple de réalisation, le module 1 comprend trois circuits du type ISAC (110,120,130). Le circuit 12 comprend quatre entrées, trois d'entre elles étant respectivement reliées par une liaison (113,123,133) à un circuit du type ISAC (110,120,130).

Le bus 5 est relié par une liaison 141 à une première entrée d'un circuit 14 de comparaison de phase dont la seconde entrée est reliée à l'horloge locale 15 par une liaison 142.

La sortie du circuit 14 est reliée par une liaison 143 à un circuit 13 qui est un oscillateur contrôlé en tension, appelé circuit VCO. La fréquence centrale du circuit 13 est à 8.192 kbit/s.

Le circuit VCO 13 est relié au bus local 10 par une liaison 145. La sortie du circuit VCO 13 est reliée d'une part, à l'entrée du microprocesseur 19 par une liaison 144 et d'autre part à une entrée de l'horloge locale 15 par une liaison 146.

Le microprocesseur 19 est relié au bus local 10 par une liaison 147. La sortie du microprocesseur 19 est reliée par une liaison 148 à la première entrée d'un circuit logique ET 16.

L'horloge locale 15 est reliée au bus local 10 par une liaison 149. Comme décrit précédemment, la sortie de l'horloge locale 15 est reliée par une liaison 112 (122, 132) au circuit 110 (120, 130) et par une liaison 142 au circuit comparateur de phase 14. Elle est de plus reliée par une liaison 154 à la première entrée d'un circuit logique ET 17.

Le module 1 comprend un circuit de contrôle 18, appelé chien de garde, qui est relié au bus local 10 par une liaison 150. De façon classique, ce circuit reçoit les signaux correspondant au contrôle du bon fonctionnement des éléments essentiels du module et délivre un signal logique de valeur correspondante.

La sortie du circuit 18 est reliée à une entrée du circuit multiplexeur 12 par une liaison 151, à la deuxième entrée du circuit ET 16 par une liaison 152 et par une liaison 153 à la deuxième entrée du circuit ET 17. Elle est de plus reliée par une liaison 158 à une porte inverseuse 21 du module 2.

Dans l'exemple représenté, le module 1 est le module pilote du circuit de base de temps. Dans ce but, la troisième entrée des circuits logiques ET 16 et 17 est reliée à un circuit logique 11 qui délivre en permanence un signal logique de valeur 1.

La sortie du circuit ET 16 est reliée par une liaison 155 à un deuxième bus 3 qui est commun à tous les modules et qui est relié, dans le module 1, aux circuits de type ISAC (110, 120, 130) par des liaisons (114, 124, 134).

La sortie du circuit ET 17 est reliée par une liaison 156 à un troisième bus 4 qui est commun à tous les modules et qui est relié, dans le module 1, au circuit multiplexeur 12 par une liaison 157.

Nous allons maintenant décrire le fonctionnement du circuit de base de temps.

Dans le cas où toutes les liaisons sont désactivées, aucun module ne délivre de signal CP. Le bus 5 ne véhicule donc aucun signal et les modules ne sont pas synchronisés sur le réseau public.

L'horloge locale du module choisi comme pilote, dans notre exemple exemple le module de tête 1, pilotée par le circuit VCO 13 délivre un signal, appelé signal DCL synchronisé sur ce circuit 13. Comme on va le voir, ce signal DCL sert à synchroniser l'ensemble de la régie.

Ce signal DCL est reçu sur la première entrée du circuit logique ET 17 via la liaison 154. Le circuit logique ET 17 reçoit sur sa deuxième entrée le signal logique délivré par le circuit de contrôle 18 et sur sa troisième entrée le signal logique de valeur 1 délivré par le circuit logique 11.

Le microprocesseur 19 (29...) de chaque module délivre un signal de référence qui est un signal impulsionnel appelé signal SYP à 8 kbit/s.

Le signal SYP est reçu sur la première entrée du circuit logique ET 16 (26...) via la liaison 148 (248...). Le circuit logique ET 16 du module 1, choisi comme module de tête, reçoit en permanence sur sa troisième entrée un signal logique de valeur 1 délivré par le circuit logique 11.

Dans l'hypothèse où le module n'est pas défaillant, le circuit de contrôle 18 délivre un signal logique de valeur 1 qui est reçu sur la deuxième entrée des circuits logiques ET 16 et 17.

Le circuit logique ET 17 transmet au bus 4 via la liaison 156, un signal logique de même fréquence que le signal DCL. Ce signal DCL est transmis via le bus 4 et les liaisons 157 (257...) au circuit multiplexeur 12 (22...) de chaque module 1 (2...).

Le circuit multiplexeur 12 envoie le signal DCL sur le bus 5 via la liaison 140. Ce signal est transmis à la première entrée du circuit 14 (24,...) de comparaison de phase de tous les modules via les liaisons 141 (241,...).

D'autre part, l'horloge locale 15 (25...) de chaque module délivre un signal DCL qui est reçu via la liaison 142 (242...) sur la seconde entrée du circuit 14 (24...).

Les modules sont donc tous asservis sur le signal délivré par le circuit VCO du module pilote.

Le circuit logique ET 16 transmet un signal logique de même fréquence que le signal SYP au bus 3 via la liaison 155. Ce signal est transmis à tous les modules via le bus 3 et les liaisons 114, 124, 134 (214, 224...) et sert de référence à tous les circuits ISAC 110, 120, 130, ((210,220...)...) et à l'horloge locale 15 (25...) de chaque module.

Dans l'hypothèse où le module 1 est défaillant, le circuit de contrôle 18 délivre un signal logique de valeur 0, le circuit logique ET 17 ne délivre aucun signal et le circuit multiplexeur 12 n'envoie plus de signal sur le bus 5. De même, le circuit logique ET 16 ne transmet plus de signal au bus 3.

Le circuit logique 21 délivre un signal logique de valeur 1. Si le module 2 fonctionne correctement, le circuit logique ET 27 délivre le signal DCL et le circuit multiplexeur 22 envoie le signal DCL sur le bus 5.

De plus, le circuit logique ET 16 transmet au bus 3 le signal de même fréquence que le signal SYP.

Si un défaut existe ou apparaît dans le fonctionnement du module 2, le circuit logique 31 du module 3 reçoit un signal logique de valeur 1 et ainsi de suite.

Lorsqu'une liaison (111, 121, 131) reliant le réseau public au module 1 du circuit de base de temps est de nouveau activée, le circuit ISAC correspondant (110, 120, 130) transmet au circuit multiplexeur 12 un signal, appelé signal CP par une liaison (113, 123, 133). Le signal CP est en phase avec la base de temps du réseau public.

Comme on va le voir, ce signal CP sert à synchroniser l'ensemble de la régie.

Le circuit multiplexeur 12 transmet le signal CP au bus 5 par la liaison 140 dans l'hypothèse où le module fonctionne correctement, le circuit de contrôle 18 délivrant alors un signal logique de valeur 1 transmis au circuit 12 par la liaison 151. Le bus 5 transmet le signal CP aux différents modules par la liaison 141 (241, ...). Le signal CP est reçu sur la première entrée du circuit 14 (24, ...) de comparaison de phase de chaque module.

L'horloge locale 15 (25, ...) de chaque module délivre un signal appelé signal DCL. Ce signal DCL est reçu, via la liaison 142, (242, ...) sur la seconde entrée du circuit 14 (24,...).

A la sortie du circuit 14 (24, ...) apparaît un signal en tension, proportionnel à la différence de phase existant entre les signaux reçus sur ses première et seconde entrées.

Ce signal est transmis à l'entrée du circuit VCO 13 (23, ...). Le signal de sortie du circuit VCO 13 (23, ...) fait fonction de signal d'horloge pour le microprocesseur 19 (29, ...) auquel il est transmis par la liaison 144 (244,...). Le signal de sortie du circuit VCO pilote aussi l'horloge locale 15 (25, ...) à laquelle il est transmis par la liaison 146 (246, ...).

Le circuit VCO 13 (23...) de chaque module permet de modifier progressivement le signal délivré par l'horloge locale de chaque module. Le signal de sortie de l'horloge locale, signal DCL, est transmis, outre au circuit 14 (24, ...) comme nous l'avons vu, à tous les circuits ISAC 110, 120, 130 ((210, 220...), (...), ...) par les liaisons 112, 122, 132 ((212, 222,...), (...), ...).

Comme décrit plus haut, les circuits ISAC peuvent compenser des différences de phase existant entre les signaux CP et DCL jusqu'à 18 μs.

Comme nous l'avons vu précédemment, le circuit logique ET 16 transmet un signal logique de même fréquence que le signal SYP au bus 3 via la liaison 155. Ce signal est transmis à tous les modules via le bus 3 et les liaisons 114, 124, 134 ((214, 224,...), ...) et sert de référence à tous les circuits ISAC 110, 120, 130 ((210, 220,...)...) et à l'horloge locale 15 (25,...) de chaque module.

Dans l'hypothèse où un défaut apparaît dans le fonctionnement du module 1, le circuit de contrôle 18 délivre un signal logique de valeur 0. Aucun signal n'apparaît en sortie du circuit logique ET 16 et le circuit multiplexeur 12 ne transmet aucun signal sur la liaison 140 en direction du bus 5.

Le circuit logique 21 du module 2, qui reçoit le signal de sortie du circuit de contrôle 18 du module 1, délivre dans l'hypothèse présente un signal logique de valeur 1. Si le module 2 n'est pas défaillant et dans la mesure où une liaison (211, 221, 231) reliant le réseau public au module 2 est activée, le circuit du type ISAC correspondant (210,220,230) transmet via le circuit multiplexeur 22, un signal au bus 5.

Si le module 2 est défaillant, le circuit logique 31 du module 3 délivre un signal logique de valeur 1 et ainsi de suite.

Il ressort du fonctionnement décrit ci-dessus que le circuit VCO 14 (24,...) de chaque module permet de modifier progressivement le signal délivré par l'horloge locale de chaque module 15 (25,...) jusqu'à ce que ce signal soit synchronisé sur le signal reçu du réseau public.

Ainsi, la reprise de synchronisation s'effectue sans saut brusque de phase et le fonctionnement en local de la régie n'est pas perturbé lors du passage de l'état où aucune liaison n'est activée à l'état où au moins une liaison est activée.

De façon préférée, le circuit de base de temps comprend 4 à 5 modules identiques connectés en parallèle aux trois bus communs.

Dans un exemple de réalisation, le circuit ISAC est un circuit intégré référencé PEB 2085 de SIEMENS, le circuit VCO est un circuit référencé 8281 de OSCILLOQUARTZ, le circuit de comparaison de phase est un circuit référencé MC 4044 de MOTOROLA, le microprocesseur est fabriqué par INTEL et le multiplexeur est fabriqué par TEXAS INSTRUMENTS.

## Revendications

1 - Circuit de base de temps relié à un réseau public de téléphonie par au moins une liaison et fonctionnant quel que soit l'état de la (ou des) liaison(s), caractérisé en ce qu'il comprend au moins un module (1) connecté à trois bus (3, 4, 5), comprenant
- des moyens (110) pour extraire, du signal transmis par ladite liaison lorsqu'elle est activée, un premier signal de synchronisation,
- des moyens (15) délivrant un second signal de synchronisation,
- des moyens (14) émettant un signal proportionnel à la différence de phase entre lesdits premier et second signaux de synchronisation,
- des moyens (19) pour émettre un signal de référence,
- des moyens (13) pilotés par ledit signal proportionnel et dont le signal de sortie pilote lesdits moyens (19) pour émettre un signal de référence, et lesdits moyens (15) délivrant un second signal de synchronisation,
- des moyens (12) pour transmettre au premier bus (5) le premier signal de synchronisation lorsqu'une liaison est activée ou le second signal de synchronisation lorsqu'aucune liaison n'est activée,
- des moyens (18) délivrant un signal significatif du bon ou mauvais fonctionnement du module,
- des moyens (16, 17, 11) pour n'autoriser la transmission du signal de référence au deuxième bus (3) et du second signal de synchronisation au troisième bus (4) que lorsque ledit module n'est pas défaillant,
les moyens (110, 12, 13, 15, 18, 19) étant tous reliés à un bus local (10).

2 - Circuit de base de temps selon la revendication 1 caractérisé en ce qu'il comprend au moins deux modules identiques (1,2) connectés à trois bus communs (3, 4, 5), un module étant choisi comme pilote, les moyens (18) permettant en outre de rendre pilote un autre module lorsque le module pilote est défaillant.

Vers modules
suivants

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | TELECOM REPORT, vol. 4, Beiheft "Digitalvermittlungssystem EWSD", 1981, pages 43-48, Passau, DE; H. GRÜNER et al.: "Synchronisation der Vermittlungseinrichtungen in Digitalnetzen" * Page 44, colonne de milieu, ligne 6 - page 47, colonne de gauche, ligne 10 * | 1 | H 04 L    7/00 H 04 J    3/06 |
| A | IDEM. | 2 | |
| Y | US-A-4 672 299   (GRIMES) * Résumé * | 1 | |
| A | INTERNATIONAL SWITCHING SYMPOSIUM, Kyoto, 25-29 octobre 1976, vol. 2, pages 441-3-1 - 441-3-8, I.E.C.E., Tokyo, JP; T. EGAWA et al.: "A study on master-slave synchronization technique" * Page 441-3-2, colonne de gauche, ligne 28 - colonne de droite, ligne 32 * | 1 | |
| | | | **DOMAINES TECHNIQUES RECHERCHES (Int. Cl.4)** |
| A | TELECOM REPORT (SIEMENS), vol. 9, no. 4, juillet/août 1986, pages 263-269, Berlin, DE; W. ERNST et al.: "Neue Taktgeneratoren für EWSD" * Page 266, colonne de droite, ligne 12 - page 267, colonne de droite, ligne 8 * | 1,2 | H 04 L H 04 J |

Le présent rapport a été établi pour toutes les revendications

| Lieu de la recherche | Date d'achèvement de la recherche | Examinateur |
|---|---|---|
| LA HAYE | 14-02-1989 | VERSLYPE J.P. |

EPO FORM 1503 03.82 (P0402)